# EUROPEAN PATENT APPLICATION

(11) **EP 4 831 935 A1**
(43) Date of publication of application: **28.10.2026**
(21) Application number: 24925491.3
(22) Date of filing: 12.09.2024
(51) Int. Cl.: G06V 10/82

(54) **PATH LOSS DETERMINATION METHOD AND APPARATUS, STORAGE MEDIUM, AND ELECTRONIC DEVICE**

(30) Priority: 22.02.2024 CN 202410199012
(71) Applicant: ZTE CORPORATION, Shenzhen, Guangdong 518057 (CN)
(72) Inventor: LI, Yong, Shenzhen, Guangdong 518057 (CN); JIANG, Fenyu, Shenzhen, Guangdong 518057 (CN); LI, Tong, Shenzhen, Guangdong 518057 (CN); JIN, Depeng, Shenzhen, Guangdong 518057 (CN); LV, Xingzai, Shenzhen, Guangdong 518057 (CN); RUI, Hua, Shenzhen, Guangdong 518057 (CN)
(74) Representative: Pennacchio, Salvatore Giovanni
(86) International application number: PCT/CN2024/118596
(87) International publication number: WO 2025/175751

(57) **Abstract**

A path loss determination method and apparatus, a storage medium, and an electronic device are provided. The method includes: determining (S202) a superimposed field image of a target grid scene on the basis of a first image, a second image, and an incident field image of the target grid scene; determining (S204) a first loss function on the basis of the incident field image and the superimposed field image, and determining (S204) a second loss function on the basis of the superimposed field image and drive test data of the target grid scene; determining (S206) a target loss function on the basis of the first loss function and the second loss function; and training (S208) a neural network model on the basis of the target loss function, so as to determine the path loss of the target grid scene by means of the trained neural network model.

## Description

The present disclosure claims priority to Chinese Patent Application No. 202410199012.5 filed with the China National Intellectual Property Administration on February 22, 2024, titled "Path Loss Determination Method and Apparatus, Storage Medium, and Electronic Device", the entire content of which is incorporated herein by reference.

### Technical Field

Embodiments of the present disclosure relate to the field of wireless communication, and in particular, to a path loss determination method and apparatus, a storage medium, and an electronic device.

### Background

Path Loss Estimation refers to a process of estimating the path loss of wireless signal transmission given known conditions including position information and engineering parameters of base stations, distribution information of buildings in urban scenarios, and positions of users receiving signals.

According to driving modes, existing path loss estimation solutions are divided into two categories: knowledge-driven mode and data-driven mode.

When the data-driven mode is adopted to estimate the path loss of wireless signal transmission, the path loss may be estimated by deploying deep learning models including artificial neural networks, convolutional neural networks, graph neural networks, generative adversarial networks, or the like. Leveraging a trained neural network model, mass results can be generated in batches at high speed. Meanwhile, neural networks possess powerful capability to fit complex nonlinear relationships, so this mode achieves a balance between estimation accuracy and computational efficiency. However, the data-driven mode relies excessively on data used for model training and suffers from unsatisfactory generalization performance.

By contrast, the path loss of wireless signal transmission can also be estimated via the knowledge-driven mode. For instance, various channel models formulated under the 3rd Generation Partnership Project (3GPP) standard, which are established on the intrinsic physical principles of electromagnetic wave propagation, allow users to compute electromagnetic field distribution by solving Maxwell's equations at multiple spatial scales and then obtain path loss via statistical analysis of signal energy attenuation. This knowledge-driven mode fully incorporates building distribution information and electromagnetic propagation laws within urban scenarios, thereby improving both the estimation accuracy and generalization performance of path loss prediction. Nevertheless, the solving procedure requires fine-grained grid partitioning of a target grid scenario, and complicated computation operations need to be executed on every single grid cell. This drastically raises computational load and degrades overall computational efficiency.

In short, conventional path loss estimation methods in the related art fail to achieve a balance between estimation accuracy and computational efficiency.

Accordingly, improvements to the related technologies are required to address the abovementioned drawbacks of the related art.

### Summary

Embodiments of the present disclosure provide a path loss determination method and apparatus, a storage medium, and an electronic device, which may at least solve the problem that path loss estimation methods in the related art cannot achieve a balance between estimation accuracy and computational efficiency.

According to some embodiments of the present disclosure, a path loss determination method is provided, including: determining a superimposed field image of a target grid scenario according to a first image, a second image and an incident field image of the target grid scenario, wherein the first image indicates a position of a first object in the target grid scenario, and the second image indicates a position of a second object in the target grid scenario; determining a first loss function according to the incident field image and the superimposed field image, and determining a second loss function according to the superimposed field image and field measurement data of the target grid scenario; determining a target loss function according to the first loss function and the second loss function; and training a neural network model according to the target loss function, so as to determine path loss of the target grid scenario by using the trained neural network model.

In an exemplary embodiment, before determining the superimposed field image of the target grid scenario according to the first image, the second image and the incident field image of the target grid scenario, the path loss determination method further includes: determining a first position of the first object in the target grid scenario according to the first image, and determining a second position of the second object in the target grid scenario according to the second image; determining an incident field of each grid in the target grid scenario according to the first position and the second position; and generating the incident field image of the target grid scenario according to the incident field of each grid.

In an exemplary embodiment, determining the superimposed field image of the target grid scenario according to the first image, the second image and the incident field image of the target grid scenario includes: acquiring a first real part and a first imaginary part in a complex form corresponding to the incident field image; generating a first incident field image according to the first real part, and generating a second incident field image according to the first imaginary part; and determining the superimposed field image according to the first image, the second image, the first incident field image and the second incident field image.

In an exemplary embodiment, determining the superimposed field image according to the first image, the second image, the first incident field image and the second incident field image includes: respectively extracting a first image feature of the first image, a second image feature of the second image, a third image feature of the first incident field image, and a fourth image feature of the second incident field image; determining correlated image features of the first image, the second image, the first incident field image and the second incident field image according to the first image feature, the second image feature, the third image feature and the fourth image feature; and determining the superimposed field image according to the correlated image features and a Volume Integral Equation (VIE).

In an exemplary embodiment, determining the second loss function according to the superimposed field image and the field measurement data of the target grid scenario includes: inputting the superimposed field image into a path loss map converter, so as to instruct the path loss map converter to convert the superimposed field image into a path loss map corresponding to the target grid scenario; correcting the path loss map based on the field measurement data and the superimposed field image to obtain a target path loss map after correction; and determining the second loss function according to the target path loss map after correction and the field measurement data.

In an exemplary embodiment, correcting the path loss map based on the field measurement data and the superimposed field image to obtain the target path loss map after correction includes: inputting the superimposed field image into a deep learning network to acquire a second real part and a second imaginary part in a complex form corresponding to the superimposed field image; calculating path loss data of the path loss map according to the second real part and the second imaginary part; and correcting the path loss map according to a deviation between the path loss data and the field measurement data, so as to obtain the target path loss map.

In an exemplary embodiment, training the neural network model according to the target loss function includes: a calculation operation for calculating a gradient of the target loss function; an adjustment operation for adjusting the gradient according to a preset optimization algorithm, and updating the neural network model based on the adjusted gradient; a determination operation for determining a calculation result of the target loss function by using the updated neural network model; and cyclically executing the adjustment operation and the determination operation until the calculation result is less than or equal to a preset threshold.

In an exemplary embodiment, determining the target loss function according to the first loss function and the second loss function includes: determining a first weight of the first loss function in the neural network model, or determining a second weight of the second loss function in the neural network model; in a case where the first weight is determined, calculating a first product of the first weight and the first loss function, and determining a sum of the first product and the second loss function as the target loss function; in a case where the second weight is determined, calculating a second product of the second weight and the second loss function, and determining a sum of the second product and the first loss function as the target loss function.

According to another embodiment of the present disclosure, a path loss determination apparatus is provided, including: a first determination module, configured to determine a superimposed field image of a target grid scenario according to a first image, a second image and an incident field image of the target grid scenario, wherein the first image indicates a position of a first object in the target grid scenario, and the second image indicates a position of a second object in the target grid scenario; a second determination module, configured to determine a first loss function according to the incident field image and the superimposed field image, and determine a second loss function according to the superimposed field image and field measurement data of the target grid scenario; a third determination module, configured to determine a target loss function according to the first loss function and the second loss function; and a training module, configured to train a neural network model according to the target loss function, so as to determine path loss of the target grid scenario by using the trained neural network model.

According to yet another embodiment of the present disclosure, a computer-readable storage medium is further provided. The computer-readable storage medium stores a computer program, and the computer program, when executed by a processor, implements the operations in any one of the above method embodiments.

According to yet another embodiment of the present disclosure, an electronic device is further provided. The electronic device includes a memory and a processor. The memory stores a computer program, and the processor executes the computer program to implement the operations in any one of the above method embodiments.

According to yet another embodiment of the present disclosure, a computer program product is further provided, including computer instructions which, when executed by a processor, implement the operations of the path loss determination method in any one of the above method embodiments.

With the technical solution of the present disclosure, a superimposed field image of a target grid scenario is determined according to a first image indicating a position of a first object in the target grid scenario, a second image indicating a position of a second object in the target grid scenario, and an incident field image of the target grid scenario; a first loss function is determined based on the incident field image and the superimposed field image, and a second loss function is determined based on the superimposed field image and field measurement data; a target loss function for training a neural network model is determined according to the first loss function and the second loss function, and path loss of the target grid scenario is further determined via the trained neural network model. That is to say, the embodiments of the present disclosure define a technical solution for calculating path loss through a trained neural network model, where the first loss function is determined based on the superimposed field image and the incident field image, the second loss function is determined based on field measurement data and the superimposed field image, and the target loss function used for training the neural network model is determined according to the first loss function and the second loss function. When constructing the target loss function of the present disclosure, both physical equations for the incident field and the superimposed field and field measurement data are comprehensively taken into consideration. The technical solution solves the problem that path loss estimation methods in the related art cannot achieve a balance between estimation accuracy and computational efficiency. After the neural network model is trained with the target loss function, both the estimation accuracy and computational efficiency of path loss can be improved in the process of determining path loss.

### Brief Description of the Drawings

FIG. 1 is a hardware block diagram of a computer terminal for implementing a path loss determination method according to some embodiments of the present disclosure;
FIG. 2 is a flowchart of a path loss determination method according to some embodiments of the present disclosure;
FIG. 3 is a schematic diagram of a path loss estimation model according to an exemplary embodiment of the present disclosure;
FIG. 4 is a schematic diagram of a two-dimensional wireless communication scenario according to an exemplary embodiment of the present disclosure;
FIG. 5 is a structural diagram of a UNet network of a knowledge-driven module according to an exemplary embodiment of the present disclosure;
FIG. 6 is a structural diagram of a UNet network of a data-driven module according to an exemplary embodiment of the present disclosure; and
FIG. 7 is a structural block diagram of a path loss determination apparatus according to some embodiments of the present disclosure.

### Detailed Description of the Embodiments

The embodiments of the present disclosure will be described in detail below with reference to the accompanying drawings in conjunction with the embodiments.

It should be noted that the terms "first", "second" and the like used in the specification, claims and the above accompanying drawings of the present disclosure are only used to distinguish similar objects, and are not intended to describe a specific sequence or order.

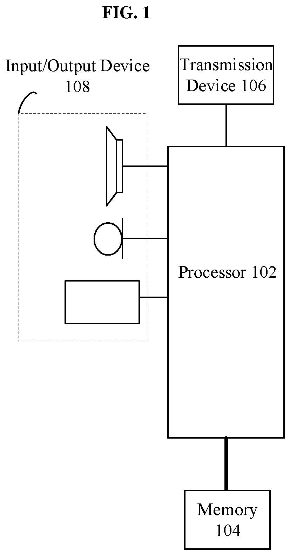

The method embodiments provided in the embodiments of the present disclosure may be executed in a computer terminal or similar computing device. Taking operation on a computer terminal as an example, FIG. 1 is a hardware block diagram of a computer terminal for implementing a path loss determination method according to some embodiments of the present disclosure. As shown in FIG. 1, the computer terminal may include one or more processors 102 (only one is shown in FIG. 1) and a memory 104 for storing data. The processor 102 may include, but is not limited to, a processing device such as a Microcontroller Unit (MCU) or a Field Programmable Gate Array (FPGA). The foregoing computer terminal may further include a transmission device 106 for communication functions and an input/output device 108. Those having ordinary skill in the art can understand that the structure shown in FIG. 1 is merely schematic and does not limit the structure of the foregoing computer terminal. For example, the computer terminal may include more or fewer components than those shown in FIG. 1, or have a different configuration from that shown in FIG. 1.

The memory 104 may be configured to store computer programs, such as software programs and modules of application software, for example, the computer program corresponding to the path loss determination method in the embodiments of the present disclosure. The processor 102 executes various functional applications and data processing by running the computer programs stored in the memory 104, that is, implements the foregoing method. The memory 104 may include a high-speed random access memory, and may further include a non-volatile memory, such as one or more magnetic storage devices, flash memory, or other non-volatile solid-state memories. In some embodiments, the memory 104 may further include a memory remotely disposed relative to the processor 102, and such remote memory may be connected to the computer terminal via a network. Examples of the foregoing networks include, but are not limited to, the Internet, an intranet, a local area network, a mobile communication network, and combinations thereof.

The transmission device 106 is configured to receive or transmit data via a network. Specific examples of the foregoing network may include a wireless network provided by a communication service provider of the computer terminal. In an embodiment, the transmission device 106 includes a Network Interface Controller (NIC), which may be connected to other network devices via a base station so as to communicate with the Internet. In an embodiment, the transmission device 106 may be a Radio Frequency (RF) module, which is configured to communicate with the Internet in a wireless manner.

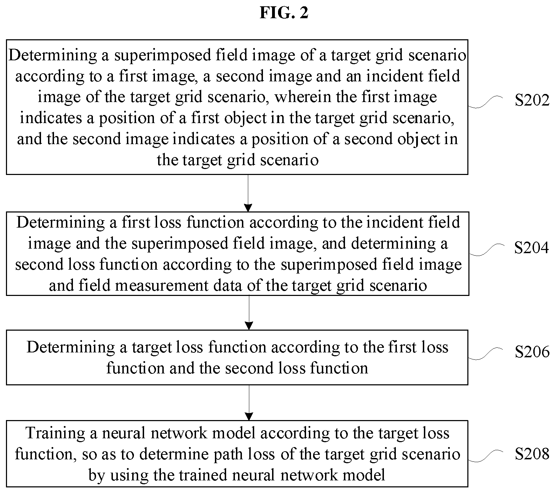

In this embodiment, a path loss determination method running on the computer terminal in FIG. 1 is provided. FIG. 2 is a flowchart of a path loss determination method according to some embodiments of the present disclosure. As shown in FIG. 2, the flowchart includes the following operations S202 to S208.

In operation S202, a superimposed field image of a target grid scenario is determined according to a first image, a second image and an incident field image of the target grid scenario, wherein the first image indicates a position of a first object in the target grid scenario, and the second image indicates a position of a second object in the target grid scenario.

It can be understood that the foregoing first object may be a base station, and accordingly the foregoing first image may be an image indicating the position of the base station in the target grid scenario. The foregoing second object may be a building, and accordingly the foregoing second image may be an image indicating the position of the building (the position of each building among one or more buildings) in the target grid scenario. The foregoing target grid scenario includes base stations, buildings, roads, or the like.

For example, when the first object is a base station and the second object is a building, a two-dimensional space at least containing the base station and the buildings may be divided into grids via the Method of Moments (MOM) to form the target grid scenario. A first value (optionally 1) is assigned to position(s) of the base station(s) in the target grid scenario, and a second value (optionally 0) is assigned to other position(s) excluding the base station(s), so as to generate the first image. Similarly, the first value (optionally 1) is assigned to position(s) of building(s) in the target grid scenario, and the second value (optionally 0) is assigned to other position(s) excluding the building(s), so as to generate the second image.

In operation S204, a first loss function is determined according to the incident field image and the superimposed field image, and determining a second loss function according to the superimposed field image and field measurement data of the target grid scenario.

In operation S206, a target loss function is determined according to the first loss function and the second loss function.

It can be understood that the target loss function is determined from the first loss function and the second loss function. That is, the neural network model trained via the target loss function satisfies both the physical formulas contained in the first loss function and the field measurement data contained in the second loss function. As a result, the neural network model can improve both the estimation accuracy and generalization performance of path loss estimation, as well as the computational efficiency of path loss estimation.

In operation S208, a neural network model is trained according to the target loss function, so as to determine path loss of the target grid scenario by using the trained neural network model.

Through the above operations, a superimposed field image of a target grid scenario is determined according to a first image indicating a position of a first object in the target grid scenario, a second image indicating a position of a second object in the target grid scenario, and an incident field image of the target grid scenario; a first loss function is determined based on the incident field image and the superimposed field image, and a second loss function is determined based on the superimposed field image and field measurement data; a target loss function for training a neural network model is determined according to the first loss function and the second loss function, and path loss of the target grid scenario is further determined via the trained neural network model. That is to say, the embodiments of the present disclosure define a technical solution for calculating path loss through a trained neural network model, where the first loss function is determined based on the superimposed field image and the incident field image, the second loss function is determined based on field measurement data and the superimposed field image, and the target loss function used for training the neural network model is determined according to the first loss function and the second loss function. When constructing the target loss function of the present disclosure, both physical equations for the incident field and the superimposed field and field measurement data are comprehensively taken into consideration. The technical solution solves the problem that path loss estimation methods in the related art cannot achieve a balance between estimation accuracy and computational efficiency. After the neural network model is trained with the target loss function, both the estimation accuracy and computational efficiency of path loss can be improved in the process of determining path loss.

In an exemplary implementation, before operation S202 of determining the superimposed field image of the target grid scenario according to the first image, the second image and the incident field image of the target grid scenario, the path loss determination method further includes: determining a first position of the first object in the target grid scenario according to the first image, and determining a second position of the second object in the target grid scenario according to the second image; determining an incident field of each grid in the target grid scenario according to the first position and the second position; and generating the incident field image of the target grid scenario according to the incident field of each grid.

It can be seen from the above technical solution that the incident field image of the target grid scenario needs to be acquired before determining the superimposed field image. There are multiple ways to acquire the incident field image. In the embodiments of the present disclosure, the incident field image may be determined based on the first image and the second image. Specifically, an incident field result of each second position (each building) relative to the first position (base station) in the target grid scenario is calculated via the formula ${E}_{n}^{inc} \left({p}_{n}\right) = G \left({p}_{tx}-{p}_{n}\right)$, and the incident field image is generated based on the incident field result. Herein, ${E}_{n}^{inc} \left({p}_{n}\right)$ denotes the incident field result, pₙ denotes the second position, pₜₓ denotes the first position, and G(·) denotes the Green's function in the two-dimensional space.

In the above formula, $G \left({p}_{tx}-{p}_{n}\right) = - j / 4 {H}_{0}^{\left(2\right)} \left(k\left|{p}_{tx}-{p}_{n}\right|\right)$, where ${H}_{0}^{\left(2\right)} \left(\cdot \right)$ denotes a zero-order Hankel function of the second kind, which is a type of Bessel function; k denotes the wave number, where $k = ω \sqrt{{ε}_{0} {μ}_{0}}$, ε₀ denotes the permittivity in free space, and µ₀ denotes the magnetic permeability in vacuum, generally referred to as vacuum permeability, which is a physical constant.

In an exemplary implementation, operation S202 of determining the superimposed field image of the target grid scenario according to the first image, the second image and the incident field image of the target grid scenario includes: acquiring a first real part and a first imaginary part in a complex form corresponding to the incident field image; generating a first incident field image according to the first real part, and generating a second incident field image according to the first imaginary part; and determining the superimposed field image according to the first image, the second image, the first incident field image and the second incident field image.

The operation of determining the superimposed field image according to the first image, the second image, the first incident field image and the second incident field image includes: respectively extracting a first image feature of the first image, a second image feature of the second image, a third image feature of the first incident field image, and a fourth image feature of the second incident field image; determining correlated image features of the first image, the second image, the first incident field image and the second incident field image according to the first image feature, the second image feature, the third image feature and the fourth image feature; and determining the superimposed field image according to the correlated image features and a Volume Integral Equation (VIE).

The above procedure defines the technical solution for acquiring the superimposed field image, which is detailed as follows:
1) Acquire the first incident field image and the second incident field image
   The incident field image corresponds to a complex form and can be split into a real-part image (i.e., the first incident field image in the embodiments of the present disclosure) determined by the first real part and an imaginary-part image (i.e., the second incident field image in the embodiments of the present disclosure) determined by the first imaginary part. The real-part image may indicate light intensity distribution, i.e., brightness or darkness distribution of light, while the imaginary-part image may indicate phase information, i.e., phase distribution of light waves.
2) Extract the first image feature of the first image, the second image feature of the second image, the third image feature of the first incident field image, and the fourth image feature of the second incident field image
   The first image, the second image, the first incident field image and the second incident field image are input into a Unified Network Model, i.e., a convolutional neural network taking UNet as the core (also referred to as a UNet network model). An encoder extracts the foregoing first image feature, second image feature, third image feature and fourth image feature. The foregoing image features include, but are not limited to, color, texture, shape, edge, or other features of the images.
3) Determine correlated image features
   A decoder determines the correlated image features based on the first image feature, the second image feature, the third image feature and the fourth image feature, specifically through a series of operations as follows:
   Feature matching: determining correlation relationships among the first image feature, the second image feature, the third image feature and the fourth image feature;
   Alignment and registration: performing image registration on the first image feature, the second image feature, the third image feature and the fourth image feature via an image registration algorithm; and
   Feature fusion: carrying out feature fusion by means of weighted averaging, feature concatenation, or other methods, so as to complete the acquisition of the correlated image features.
4) Determine the superimposed field image according to the correlated image features and the Volume Integral Equation (VIE).

The superimposed field image is determined via the Volume Integral Equation (I + Wχ )E^{tot} = E^{inc} and the correlated image features, where E^{tot} denotes the superimposed field image, E^{inc} denotes the incident field image, W denotes an N × N coefficient matrix obtained by integrating the Green's function over each unit grid, and χ denotes a diagonal matrix whose diagonal elements represent the contrast of each grid.

After the superimposed field image is determined, the first loss function may be determined according to the incident field image and the superimposed field image. The matrix-form Volume Integral Equation (I + Wχ)E^{tot} = E^{inc} is introduced into the first loss function; with the incident field image as a learning label, continuous training is performed on the superimposed field image and network parameters are optimized, so that the output superimposed field approximates the theoretically calculated numerical result. Specifically, the first loss function is L_{PHY} =1/*N*∥(I + Wχ)E'^{tot} - E^{inc}∥, where E'^{tot} denotes the output superimposed field.

After the superimposed field image is determined, the second loss function may further be determined according to the superimposed field image and field measurement data of the target grid scenario, which includes: inputting the superimposed field image into a path loss map converter, so as to instruct the path loss map converter to convert the superimposed field image into a path loss map corresponding to the target grid scenario; correcting the path loss map based on the field measurement data and the superimposed field image to obtain a target path loss map after correction; and determining the second loss function according to the target path loss map after correction and the field measurement data.

The operation of correcting the path loss map based on the field measurement data and the superimposed field image to obtain the target path loss map after correction includes: inputting the superimposed field image into a deep learning network to acquire a second real part and a second imaginary part in a complex form corresponding to the superimposed field image; calculating path loss data of the path loss map according to the second real part and the second imaginary part; and correcting the path loss map according to a deviation between the path loss data and the field measurement data, so as to obtain the target path loss map.

It can be understood that the path loss map converter converts the superimposed field image into a path loss map of the target grid scenario. Further, the second real part and the second imaginary part of the superimposed field image are determined. The amplitude of the superimposed field is calculated via the formula $E {′}_{amp}^{tot} = \sqrt{{\left(E{′}_{real}^{tot}\right)}^{2} + {\left(E{′}_{imag}^{tot}\right)}^{2}}$, where $E {′}_{amp}^{tot}$ denotes the amplitude of the superimposed field, $E {′}_{real}^{tot}$ denotes the second real part, and $E {′}_{imag}^{tot}$ denotes the second imaginary part. The energy of the electric field can be derived from the amplitude of the superimposed field, and preliminary path loss results, i.e., path loss data, can be further obtained. The foregoing field measurement data are actual measured field data, and a certain deviation exists between the path loss data and the field measurement data. A UNet network may learn such deviation to correct the path loss map and obtain the corrected path loss map (i.e., the target path loss map).

Further, the second loss function L_{DAT} =1/*N*∥pl'-pl^{dat}∥ is determined based on the corrected path loss map (i.e., the target path loss map) and the field measurement data, where pl' denotes the corrected path loss map (i.e., the target path loss map) and pl^{dat} denotes the field measurement data.

In an exemplary implementation, the operation of training the neural network model according to the target loss function includes: a calculation operation for calculating a gradient of the target loss function; an adjustment operation for adjusting the gradient according to a preset optimization algorithm, and updating the neural network model based on the adjusted gradient; a determination operation for determining a calculation result of the target loss function by using the updated neural network model; and cyclically executing the adjustment operation and the determination operation until the calculation result is less than or equal to a preset threshold.

The target loss function is used to train the neural network model and improve the estimation accuracy, generalization performance, and computational efficiency of the neural network model for path loss estimation.

The gradient of the target loss function is calculated, and the neural network model is updated by continuously adjusting the gradient of the target loss function. When the calculation result of the target loss function determined by the neural network model is less than or equal to the preset threshold, it may be determined that training of the neural network model is completed.

In an exemplary implementation, the operation of determining the target loss function according to the first loss function and the second loss function includes: determining a first weight of the first loss function in the neural network model, or determining a second weight of the second loss function in the neural network model; in a case where the first weight is determined, calculating a first product of the first weight and the first loss function, and determining a sum of the first product and the second loss function as the target loss function; in a case where the second weight is determined, calculating a second product of the second weight and the second loss function, and determining a sum of the second product and the first loss function as the target loss function.

When λ is the first weight, the target loss function is L = λL_{PHY} + L_{DAT}; when λ is the second weight, the target loss function is L = L_{PHY} + λL_{DAT}, where L_{PHY} denotes the first loss function and L_{DAT} denotes the second loss function.

For a better understanding of the implementation procedure of the above path loss determination method, the implementation flow of the path loss determination method is described below in conjunction with exemplary embodiments, which shall not be construed as limiting the technical solutions of the embodiments of the present disclosure.

In wireless communication, channel modeling is generally carried out from two perspectives: large-scale fading characteristics and small-scale fading characteristics. The large-scale fading characteristics mainly focus on path loss, which consists of propagation loss and shadow fading. The propagation loss is related to the distance between the transmitter and the receiver, while shadow fading is caused by blocking of large obstacles (e.g., mountains, buildings) in the scenario. Small-scale fading is mainly generated by the multipath effect and related to dynamic changes of the wireless transmission environment.

For path loss estimation, existing knowledge-driven or data-driven methods suffer from certain drawbacks. For example, path loss estimation methods based on conventional empirical formulas and protocol standards have insufficient estimation accuracy and generalization performance. Electromagnetic computation-based path loss estimation methods require numerically solving Maxwell's equations, which consumes massive computing and storage resources and degrades practical computational efficiency. Data-driven neural network methods rely heavily on training data and therefore exhibit poor generalization performance. In other words, the path loss estimation methods in the related art cannot achieve a balanced tradeoff among estimation accuracy, generalization performance, and computational efficiency for path loss calculation.

An exemplary embodiment of the present disclosure provides a knowledge-data collaborative path loss estimation model. The exemplary embodiment of the present disclosure takes the Volume Integral Equation as physical knowledge for electromagnetic computation, and designs and constructs a neural network to replace conventional numerical solving methods. Details are set forth as follows.

### Exemplary Embodiment 1

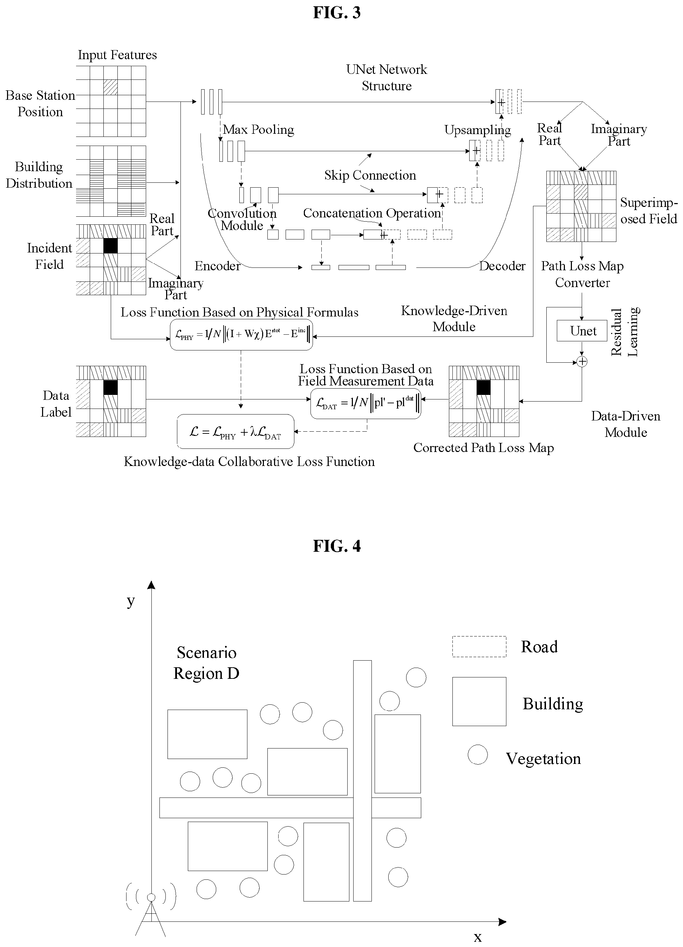

FIG. 3 is a schematic diagram of a path loss estimation model according to an exemplary embodiment of the present disclosure. As shown in FIG. 3, the path loss estimation model includes an input part, a knowledge-driven module, and a data-driven module. Details of each part are described below:
1) Input part: The input part is configured to acquire spatial distribution and dimension information of typical buildings and roads in urban scenarios from public map data, so as to construct digital representations of base stations and scatterers. That is, a two-dimensional scenario is divided into grids based on the Method of Moments (MOM) to form the target grid scenario as defined in the embodiments of the present disclosure. FIG. 4 is a schematic diagram of a two-dimensional wireless communication scenario according to an exemplary embodiment of the present disclosure. As shown in FIG. 4, an urban wireless communication scenario can be regarded as an electromagnetic propagation scenario, where base stations serve as excitation sources and urban buildings, vegetation and the like serve as scatterers.

Position information in the two-dimensional scenario can be represented by a tuple p=(x,y), where x denotes the abscissa and y denotes the ordinate. For a base station position map (i.e., the first image in the embodiments of the present disclosure), grids corresponding to base station positions (i.e., the first object) are assigned a value of 1, and all other grids are assigned a value of 0. For a building distribution map (i.e., the second image in the embodiments of the present disclosure), grids covered by buildings (i.e., the second object) are assigned a value of 1, and grids uncovered by buildings are assigned a value of 0. Meanwhile, an incident field result of each grid is calculated according to the incident field calculation formula: ${E}_{n}^{inc} \left({p}_{n}\right) = G \left({p}_{tx}-{p}_{n}\right)$.

Herein, ${E}_{n}^{inc} \left({p}_{n}\right)$ denotes the incident field result of each grid; pₜₓ denotes the base station position; pₙ denotes the building coverage position; G(·) denotes the Green's function in the two-dimensional space: $G \left({p}_{tx}-{p}_{n}\right) = - j / 4 {H}_{0}^{\left(2\right)} \left(k\left|{p}_{tx}-{p}_{n}\right|\right)$, where ${H}_{0}^{\left(2\right)} \left(\cdot \right)$ denotes a zero-order Hankel function of the second kind, which is a type of Bessel function; k is the wave number satisfying $k = ω \sqrt{{ε}_{0} {μ}_{0}}$. The incident field image of the target grid scenario is accordingly obtained. Since the incident field image of the electric field is expressed in complex form and includes a real part and an imaginary part, the incident field image can be split into an incident field real-part image and an incident field imaginary-part image.

Therefore, input images fed into the input part of the model include: the base station position map, the building distribution map, the incident field real-part image and the incident field imaginary-part image.

The four images are input into a convolutional neural network with a UNet core.

2) Knowledge-driven module: The knowledge-driven module adopts UNet to capture complex nonlinear relationships among base station positions, building distributions, incident electric fields and target superimposed electric fields.

The matrix-form Volume Integral Equation (I + Wχ)E^{tot} = E^{inc} is introduced into the loss function, where E^{inc} denotes the incident electric field; I is an N × N identity matrix; W is an N × N coefficient matrix obtained by integrating the Green's function over each unit grid; X is a diagonal matrix whose diagonal elements represent the contrast of each grid; and E^{tot} denotes the target superimposed electric field.

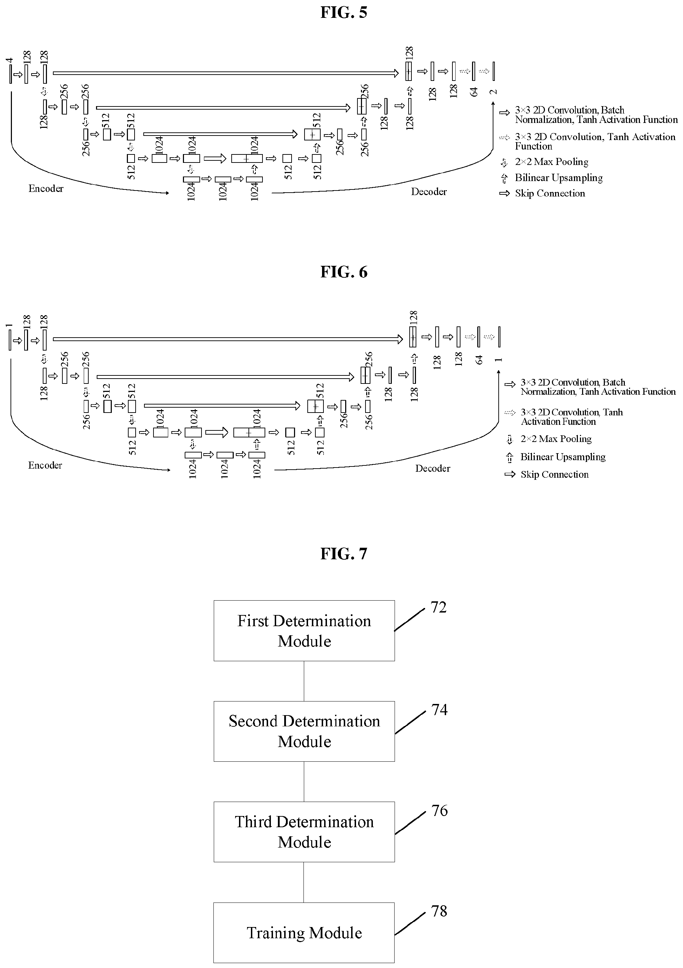

FIG. 5 is a structural diagram of a UNet network of a knowledge-driven module according to an exemplary embodiment of the present disclosure. As shown in FIG. 5, the knowledge-driven module takes the incident field E^{inc} as a learning label, and network parameters are optimized through iterative training such that the output superimposed field E'^{tot} approximates the theoretically calculated numerical result.

Further, the first loss function L_{PHY} *=1*/*N*∥(I + Wχ)E'^{tot} - E^{inc} is determined according to the incident field and the trained superimposed field.

### 3) Data-driven module

The data-driven module converts electric field intensity obtained from electromagnetic computation into a path loss map via a path loss map converter. The UNet network in the knowledge-driven module outputs two channel results, namely the real part $E {′}_{real}^{tot}$ and the imaginary part $E {′}_{imag}^{tot}$ of the estimated superimposed field. The amplitude of the superimposed field is calculated via the formula $E {′}_{amp}^{tot} = \sqrt{{\left(E{′}_{real}^{tot}\right)}^{2} + {\left(E{′}_{imag}^{tot}\right)}^{2}}$, such that the electric field energy is further derived. The preliminary distribution result of path loss can be determined by comparing the electric field energy with the transmission power of the excitation source.

A certain deviation exists between the preliminary path loss distribution result obtained from electromagnetic computation and actual field measurement data. FIG. 6 is a structural diagram of a UNet network of a data-driven module according to an exemplary embodiment of the present disclosure. In the data-driven module, the UNet network structure shown in FIG. 6 is adopted to learn the deviation between the preliminary path loss distribution result and actual field measurement data, and the intermediate output is corrected to obtain a corrected path loss map pl' (i.e., the target path loss map after correction defined in the embodiments of the present disclosure). During training, path loss map data pl^{dat} (i.e., the field measurement data defined in the embodiments of the present disclosure) are used as ground-truth labels, which are compared with the corrected path loss map pl' . Network parameters are continuously optimized to narrow the gap between the path loss map data pl^{dat} and the corrected path loss map pl' , so that the estimation result fits the distribution of real measured data more closely.

Further, the second loss function is determined via the following formula: L_{DAT} *= 1*/*N*∥pl' - pl^{dat}∥.

After the first loss function and the second loss function are determined, the two loss functions are combined to form the overall loss function of the entire network. Specifically, a first weight corresponding to the first loss function or a second weight corresponding to the second loss function may be determined to calculate the target loss function, i.e., L = λL_{PHY} + L_{DAT} or L = L_{PHY} + λL_{DAT}.

After the target loss function is determined, the neural network model needs to be trained. The gradient of the target loss function is calculated for backpropagation, and the value of the target loss function is continuously reduced to optimize network parameters, so that the output results of the neural network model gradually approximate the ground truth of field measurement data.

Finally, path loss estimation is performed using the trained neural network model. Specifically, a target scenario (i.e., the target grid scenario of the embodiments of the present disclosure) is preprocessed according to input dimensions to acquire a base station position map, a building distribution map and an incident electric field distribution map. These features are then input into the trained neural network model, and the output corrected path loss map serves as the path loss estimation result of the model.

### Exemplary Embodiment 2

A radio map dataset (e.g., RadioMapSeer) is adopted as the training dataset, which covers 700 regions across six different cities worldwide, with 80 distinct base station positions for each region. For each scenario, the dataset includes a base station position map (i.e., the first image in the embodiments of the present disclosure), a building distribution map (i.e., the second image in the embodiments of the present disclosure) and a path loss map.

The relative permittivity of buildings and air are preset, and the incident field real-part image (i.e., the first incident field image in the embodiments of the present disclosure) and incident field imaginary-part image (i.e., the second incident field image in the embodiments of the present disclosure) are calculated according to base station position information. In the exemplary embodiment, 500 regions out of the 700 regions are randomly selected as the training set, 100 regions out of the 700 regions are randomly selected as the validation set, and the remaining 100 regions are used as the test set. Such data partitioning enables the model to be exposed to diverse building distribution features during training and testing, which supports accurate model performance evaluation and reliable verification of the generalization performance of the model. After training hyperparameters (epoch number, batch size, learning rate, optimizer, etc.) are configured, samples are continuously extracted from the training set and fed into the model to update model parameters, and a trained neural network model as defined in the embodiments of the present disclosure is finally obtained.

Further, for a test scenario, grid partitioning is performed in accordance with the pixel size and dimension of training data to generate a corresponding base station position map, a building distribution map, an incident field real-part image and an incident field imaginary-part image. The four images are input into the model, and the corrected path loss map is taken as the path loss estimation result output by the model.

The exemplary embodiments of the present disclosure integrate the loss function constrained by physical formulas and the loss function built on field measurement data, such that the output results not only comply with the Volume Integral Equation derived from physical principles, but also conform to the distribution law of actual field measurement data, thereby improving the accuracy, computational efficiency and generalization performance of path loss estimation.

From the foregoing description of the embodiments, those having ordinary skill in the art can clearly understand that the path loss determination method according to the above embodiments may be implemented by means of software plus a necessary general-purpose hardware platform, and of course, may also be implemented by hardware. In most cases, the former is a preferred implementation. Based on such understanding, the technical solution of the present disclosure, or the part contributing to the related art in essence, may be embodied in the form of a computer software product. The computer software product is stored in a storage medium (such as Read-Only Memory (ROM)/Random Access Memory (RAM), magnetic disk, optical disc) and includes several instructions for enabling a terminal device (which may be a mobile phone, a computer, a server, a network device, or the like) to execute the path loss determination method described in each embodiment of the present disclosure.

The embodiments of the present disclosure further provide a path loss determination apparatus configured to implement the foregoing embodiments and exemplary implementations, and descriptions of contents already elaborated will not be repeated herein. As used hereinafter, the term "module" refers to a combination of software and/or hardware capable of implementing predetermined functions. Although the path loss determination apparatus described in the following embodiments is preferably implemented by software, implementation by hardware or a combination of software and hardware is also feasible and contemplated.

FIG. 7 is a structural block diagram of a path loss determination apparatus according to some embodiments of the present disclosure. As shown in FIG. 7, the path loss determination apparatus includes:
a first determination module 72, configured to determine a superimposed field image of a target grid scenario according to a first image, a second image and an incident field image of the target grid scenario, wherein the first image indicates a position of a first object in the target grid scenario, and the second image indicates a position of a second object in the target grid scenario;
a second determination module 74, configured to determine a first loss function according to the incident field image and the superimposed field image, and determine a second loss function according to the superimposed field image and field measurement data of the target grid scenario;
a third determination module 76, configured to determine a target loss function according to the first loss function and the second loss function; and
a training module 78, configured to train a neural network model according to the target loss function, so as to determine path loss of the target grid scenario by using the trained neural network model.

In an exemplary embodiment, the first determination module 72 is further configured to determine a first position of the first object in the target grid scenario according to the first image, and determine a second position of the second object in the target grid scenario according to the second image; determine an incident field of each grid in the target grid scenario according to the first position and the second position; and generate the incident field image of the target grid scenario according to the incident field of each grid.

In an exemplary embodiment, the first determination module 72 is further configured to acquire a first real part and a first imaginary part in a complex form corresponding to the incident field image; generate a first incident field image according to the first real part, and generating a second incident field image according to the first imaginary part; and determine the superimposed field image according to the first image, the second image, the first incident field image and the second incident field image.

In an exemplary embodiment, the first determination module 72 is further configured to respectively extract a first image feature of the first image, a second image feature of the second image, a third image feature of the first incident field image, and a fourth image feature of the second incident field image; determine correlated image features of the first image, the second image, the first incident field image and the second incident field image according to the first image feature, the second image feature, the third image feature and the fourth image feature; and determine the superimposed field image according to the correlated image features and a Volume Integral Equation (VIE).

In an exemplary embodiment, the second determination module 74 is further configured to input the superimposed field image into a path loss map converter, so as to instruct the path loss map converter to convert the superimposed field image into a path loss map corresponding to the target grid scenario; correct the path loss map based on the field measurement data and the superimposed field image to obtain a target path loss map after correction; and determine the second loss function according to the target path loss map after correction and the field measurement data.

In an exemplary embodiment, the second determination module 74 is further configured to input the superimposed field image into a deep learning network to acquire a second real part and a second imaginary part in a complex form corresponding to the superimposed field image; calculate path loss data of the path loss map according to the second real part and the second imaginary part; and correct the path loss map according to a deviation between the path loss data and the field measurement data, so as to obtain the target path loss map.

In an exemplary embodiment, the training module 78 is further configured to perform a calculation operation for calculating a gradient of the target loss function; perform an adjustment operation for adjusting the gradient according to a preset optimization algorithm, and updating the neural network model based on the adjusted gradient; perform a determination operation for determining a calculation result of the target loss function by using the updated neural network model; and cyclically execute the adjustment operation and the determination operation until the calculation result is less than or equal to a preset threshold.

In an exemplary embodiment, the third determination module 76 is further configured to determine a first weight of the first loss function in the neural network model, or determining a second weight of the second loss function in the neural network model; in a case where the first weight is determined, calculate a first product of the first weight and the first loss function, and determine a sum of the first product and the second loss function as the target loss function; in a case where the second weight is determined, calculate a second product of the second weight and the second loss function, and determine a sum of the second product and the first loss function as the target loss function.

With the above path loss determination apparatus, a superimposed field image of a target grid scenario is determined according to a first image indicating a position of a first object in the target grid scenario, a second image indicating a position of a second object in the target grid scenario, and an incident field image of the target grid scenario; a first loss function is determined based on the incident field image and the superimposed field image, and a second loss function is determined based on the superimposed field image and field measurement data; a target loss function for training a neural network model is determined according to the first loss function and the second loss function, and path loss of the target grid scenario is further determined via the trained neural network model. That is to say, the embodiments of the present disclosure define a technical solution for calculating path loss through a trained neural network model, where the first loss function is determined based on the superimposed field image and the incident field image, the second loss function is determined based on field measurement data and the superimposed field image, and the target loss function used for training the neural network model is determined according to the first loss function and the second loss function. When constructing the target loss function of the present disclosure, both physical equations for the incident field and the superimposed field and field measurement data are comprehensively taken into consideration. The technical solution solves the problem that path loss estimation methods in the related art cannot achieve a balance between estimation accuracy and computational efficiency. After the neural network model is trained with the target loss function, both the estimation accuracy and computational efficiency of path loss can be improved in the process of determining path loss.

It should be noted that each of the above modules may be implemented by software or hardware. If implemented by hardware, the implementation manners include but are not limited to: all the above modules are disposed within the same processor; or each of the above modules is disposed in different processors in any combined form.

The embodiments of the present disclosure further provide a computer-readable storage medium storing a computer program, and the computer program, when executed by a processor, implements the operations of any one of the foregoing method embodiments.

In an exemplary embodiment, the above computer-readable storage medium includes, but is not limited to, various media capable of storing computer programs such as a Universal Serial Bus (USB) flash drive, a Read-Only Memory (ROM), a Random Access Memory (RAM), a removable hard disk, a magnetic disk, and an optical disc.

The embodiments of the present disclosure further provide an electronic device, including a memory and a processor. The memory stores a computer program, and the processor executes the computer program to implement the operations of any one of the foregoing method embodiments.

In an exemplary embodiment, the above electronic device may further include a transmission device and an input/output device, wherein the transmission device is connected to the processor, and the input/output device is connected to the processor.

In an exemplary embodiment, the above computer program product may further include computer instructions which, when executed by a processor, implement the operations of the path loss determination method described in each embodiment of the present disclosure.

For specific examples in this embodiment, reference may be made to the examples described in the foregoing embodiments and exemplary implementations, and details will not be repeated herein.

Apparently, those having ordinary skill in the art shall appreciate that each module or each operation of the present disclosure described above may be implemented by a general-purpose computing device, which may be centralized on a single computing device or distributed over a network composed of multiple computing devices. They may be implemented by program codes executable by the computing device, so as to be stored in a storage device for execution by the computing device. Under certain circumstances, the operations shown or described may be performed in an order different from that set forth herein, or each may be fabricated into a separate integrated circuit module, or multiple modules or operations thereof may be fabricated into a single integrated circuit module for implementation. Therefore, the present disclosure is not limited to any specific combination of hardware and software.

The foregoing are merely exemplary embodiments of the present disclosure and are not intended to limit the present disclosure. Various modifications and variations may be made to the present disclosure by those having ordinary skill in the art. Any modification, equivalent replacement, improvement and the like made within the principle of the present disclosure shall fall within the protection scope of the present disclosure.

## Claims

1. A path loss determination method, comprising:
determining a superimposed field image of a target grid scenario according to a first image, a second image and an incident field image of the target grid scenario, wherein the first image indicates a position of a first object in the target grid scenario, and the second image indicates a position of a second object in the target grid scenario;
determining a first loss function according to the incident field image and the superimposed field image, and determining a second loss function according to the superimposed field image and field measurement data of the target grid scenario;
determining a target loss function according to the first loss function and the second loss function; and
training a neural network model according to the target loss function, so as to determine path loss of the target grid scenario by using the trained neural network model.

2. The path loss determination method according to claim 1, wherein before determining the superimposed field image of the target grid scenario according to the first image, the second image and the incident field image of the target grid scenario, the path loss determination method further comprises:
determining a first position of the first object in the target grid scenario according to the first image, and determining a second position of the second object in the target grid scenario according to the second image;
determining an incident field of each grid in the target grid scenario according to the first position and the second position; and
generating the incident field image of the target grid scenario according to the incident field of each grid.

3. The path loss determination method according to claim 1, wherein determining the superimposed field image of the target grid scenario according to the first image, the second image and the incident field image of the target grid scenario comprises:
acquiring a first real part and a first imaginary part in a complex form corresponding to the incident field image;
generating a first incident field image according to the first real part, and generating a second incident field image according to the first imaginary part; and
determining the superimposed field image according to the first image, the second image, the first incident field image and the second incident field image.

4. The path loss determination method according to claim 3, wherein determining the superimposed field image according to the first image, the second image, the first incident field image and the second incident field image comprises:
respectively extracting a first image feature of the first image, a second image feature of the second image, a third image feature of the first incident field image, and a fourth image feature of the second incident field image;
determining correlated image features of the first image, the second image, the first incident field image and the second incident field image according to the first image feature, the second image feature, the third image feature and the fourth image feature; and
determining the superimposed field image according to the correlated image features and a Volume Integral Equation, VIE.

5. The path loss determination method according to claim 1, wherein determining the second loss function according to the superimposed field image and the field measurement data of the target grid scenario comprises:
inputting the superimposed field image into a path loss map converter, so as to instruct the path loss map converter to convert the superimposed field image into a path loss map corresponding to the target grid scenario;
correcting the path loss map based on the field measurement data and the superimposed field image to obtain a target path loss map after correction; and
determining the second loss function according to the target path loss map after correction and the field measurement data.

6. The path loss determination method according to claim 5, wherein correcting the path loss map based on the field measurement data and the superimposed field image to obtain the target path loss map after correction comprises:
inputting the superimposed field image into a deep learning network to acquire a second real part and a second imaginary part in a complex form corresponding to the superimposed field image;
calculating path loss data of the path loss map according to the second real part and the second imaginary part; and
correcting the path loss map according to a deviation between the path loss data and the field measurement data, so as to obtain the target path loss map.

7. The path loss determination method according to claim 1, wherein training the neural network model according to the target loss function comprises:
a calculation operation for calculating a gradient of the target loss function;
an adjustment operation for adjusting the gradient according to a preset optimization algorithm, and updating the neural network model based on the adjusted gradient;
a determination operation for determining a calculation result of the target loss function by using the updated neural network model; and
cyclically executing the adjustment operation and the determination operation until the calculation result is less than or equal to a preset threshold.

8. The path loss determination method according to claim 1, wherein determining the target loss function according to the first loss function and the second loss function comprises:
determining a first weight of the first loss function in the neural network model, or determining a second weight of the second loss function in the neural network model;
in a case where the first weight is determined, calculating a first product of the first weight and the first loss function, and determining a sum of the first product and the second loss function as the target loss function;
in a case where the second weight is determined, calculating a second product of the second weight and the second loss function, and determining a sum of the second product and the first loss function as the target loss function.

9. A path loss determination apparatus, comprising:
a first determination module, configured to determine a superimposed field image of a target grid scenario according to a first image, a second image and an incident field image of the target grid scenario, wherein the first image indicates a position of a first object in the target grid scenario, and the second image indicates a position of a second object in the target grid scenario;
a second determination module, configured to determine a first loss function according to the incident field image and the superimposed field image, and determine a second loss function according to the superimposed field image and field measurement data of the target grid scenario;
a third determination module, configured to determine a target loss function according to the first loss function and the second loss function; and
a training module, configured to train a neural network model according to the target loss function, so as to determine path loss of the target grid scenario by using the trained neural network model.

10. A computer-readable storage medium, wherein a computer program is stored in the computer-readable storage medium, and the computer program, when executed by a processor, implements the operations of the path loss determination method according to any one of claims 1 to 8.

11. An electronic device, comprising a memory and a processor, wherein the memory stores a computer program executable on the processor, and the processor executes the computer program to implement the operations of the path loss determination method according to any one of claims 1 to 8.

12. A computer program product, comprising computer instructions, wherein the computer instructions, when executed by a processor, implement the operations of the path loss determination method according to any one of claims 1 to 8.
